# EUROPÄISCHE PATENTSCHRIFT

(11) **EP 4 201 882 B1**
(45) Veröffentlichungstag und Bekanntmachung des Hinweises auf die Patenterteilung: **21.05.2025**
(21) Anmeldenummer: 22215437.9
(22) Anmeldetag: 21.12.2022
(51) Int. Cl.: C01B 33/113, C04B 28/00, C04B 111/28

(54) **MONOLITHISCHER SILICA-FORMKÖRPER UND DESSEN HERSTELLUNG**
MONOLITHIC SILICA ARTICLE AND ITS PRODUCTION
CORPS MOULÉ MONOLITHIQUE EN SILICE ET SA FABRICATION

(30) Priorität: 22.12.2021 DE 102021134244
(43) Veröffentlichungstag der Anmeldung: 28.06.2023
(73) Patentinhaber: LST Luft-, Sanitar- und Klimatechnik GmbH, 09120 Chemnitz (DE)
(72) Erfinder: Pfau, Hartmut, 09120 Chemnitz (DE)
(74) Vertreter: Werner, André

(56) Entgegenhaltungen:
- EP-A1- 0 363 697
- EP-A2- 2 743 243
- WO-A1-95/03256
- WO-A2-2010/080238
- WO-A2-98/29350
- US-A1- 2012 128 958

## Beschreibung

Die Erfindung betrifft ein Verfahren zum Herstellen eines monolithischen Silica-Formkörpers sowie einen mittels dieses Verfahrens hergestellten Silica-Formkörper. Der Silica-Formkörper eignet sich insbesondere zur Wärmedämmung von Gebäuden.

Die Reduzierung des Energieverbrauchs von Gebäuden über ihren gesamten Lebenszyklus stellt eine der großen Herausforderungen des Bauwesens dar. Einen wesentlichen Beitrag zur Senkung des Energiebedarfes von Gebäuden bildet hierbei bekanntermaßen eine wirksame thermische Gebäudedämmung. Besondere Bedeutung haben in diesem Zusammenhang poröse, insbesondere nanoporöse Werkstoffe mit sehr hohem Porenanteil erlangt. Neben einer hohen Wärmeisolationswirkung müssen die als Wärmedämmstoff im Bauwesen eingesetzten Materialien jedoch einer Reihe weiterer Anforderungen genügen - unter anderem in Bezug auf die mechanische Stabilität, die Hydrophobizität, die Wasserdampfdurchlässigkeit und die Nichtbrennbarkeit.

Synthetische organische Wärmedämmstoffe, wie zum Beispiel geschäumtes Polystyrol oder Polyurethan, weisen Wärmeleitfähigkeiten im Bereich von 0,03 Wm⁻¹K⁻¹ bis 0,04 Wm⁻¹K⁻¹ auf; natürliche organische Wärmedämmstoffe wie Hanf, Holzwolle, Naturwolle, Kork und Zellulose zeigen zwar ausgezeichnete Werte bezüglich der Kohlendioxid-Bilanz, ihre Wärmeleitfähigkeiten liegen jedoch oberhalb von 0,04 Wm⁻¹K⁻¹. Organische Wärmedämmstoffe haben zudem häufig den Nachteil der Brennbarkeit.

Die meisten anorganischen Wärmedämmstoffe, wie Mineralwolle (Glas- und Steinwolle), Schaumglas, Perlit, Keramikschaum und Blähton, sind zwar nicht brennbar, weisen jedoch regelmäßig Wärmeleitfähigkeiten von mehr als 0,03 Wm⁻¹K⁻¹, meistens sogar Wärmeleitfähigkeiten von über 0,04 Wm⁻¹K ¹ auf.

Zu den anorganischen Wärmedämmstoffen zählen zudem poröse siliziumoxidbasierte Materialien, wie zum Beispiel Silica-Aerogele, sowie gefälltes oder pyrogenes Siliziumdioxid; mit diesen Wärmedämmstoffen sind Wärmeleitfähigkeiten von 0,02 Wm⁻¹K⁻¹ und weniger erreichbar. Besonders exzellente Wärmedämmeigenschaften besitzen die seit den 1930er Jahren bekannten Silica-Aerogele, die eine Porosität im Bereich von 95 % bis 99,8 % erreichen und Porengrößen im Bereich von Nanoporen mit weniger als 100 nm Ausdehnung aufweisen. Dies führt zu der besonders niedrigen Wärmeleitfähigkeit der Silica-Aerogele unterhalb von 0,02 Wm⁻¹K¹.

Die Silica-Aerogele stellen aufgrund ihres strukturellen Aufbaus und der damit verbundenen wärmeisolierenden Eigenschaften seit Jahren die effektivsten anorganischen Wärmedämmmaterialien dar. Zwei der wesentlichen Nachteile von Silica-Aerogelen sind jedoch zum einen die vielfach angewandte, aber aufwendige überkritische Trocknung und zum anderen die geringe mechanische Stabilität monolithischer Wärmedämmkörper aus Silica-Aerogelen.

Ein Weg zur Erhöhung der mechanischen Stabilität ist die Verstärkung der silikatischen Wände zwischen den individuellen Nanoporen; dies führt jedoch regelmäßig zu einer Minderung der Porosität und einem deutlichen Anstieg der Wärmeleitfähigkeit in den Bereich oberhalb von 0,02 Wm⁻¹K⁻¹.

Ein Verfahren zur Erhöhung der mechanischen Stabilität von Silica-Wärmedämmkörpern beschreiben EP 2 743 243 A2 bzw. EP 2 743 243 B1. Demgemäß wird ein einen Silicaprekursor enthaltendes Ausgangsmaterial (auch Synthesemischung bezeichnet) hydrolysiert und durch Zusatz eines Polymers eine Phasenseparation ausgelöst. Das Gelieren des hydrolysierten Ausgangsmaterials erfolgt in einer Gießform bei einer Geliertemperatur unter Ausbildung eines Silicagel-Formkörpers. Der Silicagel-Formkörper wird schließlich mittels hydrothermalen Erhitzens in einer gasdichten Reaktorkammer bei mindestens 100 °C temperiert und getrocknet, wodurch letztlich der Silica-Wärmedämmkörper entsteht. Diese Silica-Wärmedämmkörper besitzen eine bimodale, hierarchische Porenstruktur mit einer Porosität im Bereich von 80 % bis nahezu 95 %.

Silica-Wärmedämmkörper und deren Herstellung sind weiterhin bekannt aus DE 694 07 295 T2 bzw. WO 95/03256 A1, DE 10 2009 053 782 A1, US 2011/0237692 A1 bzw. WO 2010/080238 A2, EP 0 363 697 A1 oder DE 697 16 126 T2.

WO 2010/080238 A2 beschreibt ein Verfahren zur Bildung von Hybrid-Aerogelen aus einem Metalloxid-Prekursor und einem verzweigten telechelen Copolymer, zum Beispiel durch gemeinsame Hydrolyse und gemeinsame Kondensation des Metalloxid-Prekursors und des verzweigten telechelen Copolymers.

EP 0 363 697 A1 offenbart ein Verfahren zur Herstellung von porösem Glas, das das Herstellen einer ein Metallalkoxid oder dessen Oligomer sowie ein organisches Polymer enthaltenden Reaktionslösung, das Hydrolysieren und Polymerisieren des Metallalkoxids oder dessen Oligomers in der Lösung, um ein Gel zu erhalten, und das Kalzinieren des Gels, um poröses Glas zu erhalten, umfasst.

WO 95/03256 A1 beschreibt ein poröses anorganisches Material sowie ein Verfahren zur Herstellung des porösen anorganischen Materials, welches miteinander verbundene kontinuierliche Makroporen mit einem mittleren Durchmesser von mehr als 0,1 µm und zusätzlich Mesoporen in den Wänden dieser Makroporen aufweist, wobei diese Mesoporen einen mittleren Durchmesser zwischen 2 nm und 100 nm besitzen.

Der sehr guten mechanischen Festigkeit der mit diesem Verfahren hergestellten Wärmedämmkörper steht jedoch die im Vergleich zu den Silica-Aerogelen hohe Wärmeleitfähigkeit im Bereich oberhalb von circa 0,05 Wm⁻¹K ¹ gegenüber. Nachteilig ist zudem der aufwendige Prozessschritt des hydrothermalen Erhitzens. Die besonders hohe Porosität im Bereich von über 90 % ist jedoch bislang nur mit solch spezifischen Prozessschritten zu erreichen.

Aufgabe der Erfindung ist die Bereitstellung eines Verfahrens zum Herstellen eines monolithischen Silica-Formkörpers mit einer hierarchischen Porenstruktur, der bei hoher mechanischer und chemischer Stabilität eine Wärmeleitfähigkeit im Bereich von 0,015 bis 0,030 Wm⁻¹K ¹ aufweist. Mittels des Verfahrens sollen auf im Vergleich zum bekannten Stand der Technik weniger aufwendige Art und Weise, insbesondere in Bezug auf die Trocknung, großformatige Silica-Formkörper mit frei wählbarer Geometrie rissfrei herstellbar sein.

Die Lösung dieser Aufgabe erfolgt durch ein Verfahren zum Herstellen eines monolithischen Silica-Formkörpers, d. h. eines einstückigen, aus einem Salz oder Ester der Ortho-Kieselsäure und deren Kondensaten gebildeten Formkörpers, mit den Merkmalen nach Patentanspruch 1 und einen Silica-Formkörper mit den Merkmalen nach Patentanspruch 5. Vorteilhafte Weiterbildungen der Erfindungen sind in den Unteransprüchen beschrieben.

Gemäß des vorgeschlagenen Verfahrens zum Herstellen eines monolithischen Silica-Formkörpers wird zunächst ein Ausgangsmaterial, das mindestens einen Silicaprekursor enthält, bereitgestellt und gemäß dem grundsätzlich bekannten Ablauf eines Sol-Gel-Prozesses unter Einsatz von Wasser hydrolysiert. Als Folge der Hydrolysereaktion entsteht neben den hydrolysierten Silicaprekursoren, d. h. Kieselsäuren, ein Reaktionslösungsmittel. Es bildet sich folglich hydrolysebedingt eine dieses Reaktionslösungsmittel enthaltende Silica-Lösungsmittel-Mischung.

Das Ausgangsmaterial kann neben dem einen oder mehreren Silicaprekursoren noch weitere Bestandteile in einer homogenen Mischung aufweisen. Als Silicaprekursor können unterschiedliche Alkoxysilane und/oder Metall-Silica-Lösungen fungieren; erfindungsgemäß wird Tetraethylorthosilicat (TEOS) oder Tetramethylorthosilicat (TMOS) als Silicaprekursor verwendet.

Die Silica-Lösungsmittel-Mischung enthält das in Abhängigkeit des verwendeten Silicaprekursors während der Hydrolyse gebildete Reaktionslösungsmittel in einer Menge, die durch die Mengen der Reaktanten der Hydrolysereaktion und die Wahl der Hydrolysebedingungen vorgegeben ist. Bei der Verwendung von Tetraethylorthosilicat (TEOS) als Silicaprekursor ist Ethanol das Reaktionslösungsmittel; bei Tetramethylorthosilicat (TMOS) als Silicaprekursor bildet sich Methanol als Reaktionslösungsmittel. Das Reaktionslösungsmittel ist mithin ein organisches Lösungsmittel.

Die Hydrolyse kann zusätzlich durch Zugabe einer Säure unterstützt werden, wobei als Säure eine anorganische Säure, zum Beispiel eine Mineralsäure (wie Schwefel-, Salpeter- oder Salzsäure), oder eine organische Säure (wie Essig- oder Weinsäure) fungieren kann. Des Weiteren kann das Ausgangsmaterial einen Basenprekursor enthalten, d. h. ein Material bzw. einen Reaktanten, das/der sich oberhalb einer materialspezifischen Aktivierungstemperatur zersetzt und dabei ein basisch reagierendes Zersetzungsprodukt freisetzt. Der Basenprekursor kann zum Beispiel Harnstoff und/oder Hirschhornsalz enthalten bzw. daraus bestehen. Durch die Zugabe des Basenprekursors wird ebenfalls erreicht, dass die mittleren Porendurchmesser der Primärporen und der Sekundärporen vergrößert werden.

Durch die Hydrolyse wird eine Polykondensation bzw. Vernetzung der hydrolysierten Silicaprekursoren ausgelöst, wobei die hydrolysierten Silicaprekursoren in ein Silicagel (bzw. Kieselgel) überführt werden. Die Gelierung geht mit der Ausbildung von Poren einer ersten Porenspezies im Silicagel einher, die vorliegend als Primärporen bezeichnet sind.

Durch den Zusatz eines Polymers wird eine polymerinduzierte Phasenseparation im hydrolysierten Ausgangsmaterial bzw. in der Silica-Lösungsmittel-Mischung ausgelöst. Die Phasenseparation geht mit der Ausbildung von Poren einer zweiten Porenspezies, Sekundärporen bezeichnet, einher, wobei die Sekundärporen größer sind als die Primärporen und einen größeren mittleren Porendurchmesser aufweisen als die Primärporen. Die Primärporen besitzen erfindungsgemäß einen mittleren Porendurchmesser im Bereich von 1 nm bis 100 nm, wohingegen der mittlere Porendurchmesser der Sekundärporen im Bereich von 500 nm bis 20 µm liegt. Als phasenseparierendes Polymer fungiert Polyethylenoxid (PEO).

Sowohl das von den Primärporen gebildete Primärporennetzwerk als auch das von den Sekundärporen gebildete Sekundärporennetzwerk sind offenzellige Porennetzwerke, wobei das Primärporennetzwerk das gesamte Silicagel durchsetzt und das von dem Primärporennetzwerk durchsetzte Silicagel wiederum von dem Sekundärporennetzwerk durchsetzt ist, sodass die Wände zwischen zwei Sekundärporen mit den Primärporen durchsetzt sind. Das resultierende Silicagel weist somit eine bimodale Porenstruktur auf (d. h. Poren zweier Porenspezies mit unterschiedlichen, aber innerhalb der Spezies im Wesentlichen gleichbleibenden Porengrößen), wobei diese Porenstruktur zudem hierarchisch angeordnet ist, d. h., die größeren Sekundärporen sind in bzw. von dem mit den kleineren Primärporen durchsetzten Silicagel ausgebildet.

Erfindungsgemäß wird der Anteil des Reaktionslösungsmittels in der Silica-Lösungsmittel-Mischung durch Zugabe einer vorgegebenen Menge eines stofflich mit dem Reaktionslösungsmittel identischen Zusatzlösungsmittels erhöht. Die Zugabe des Zusatzlösungsmittels kann vor, während oder nach dem Durchführen der Hydrolyse erfolgen. D. h., in der Silica-Lösungsmittel-Mischung ist nach der Hydrolyse neben dem Reaktionslösungsmittel - zusätzlich - das mit dem Reaktionslösungsmittel stoffgleiche Zusatzlösungsmittel enthalten. Die Menge des Reaktionslösungsmittels und die Menge des Zusatzlösungsmittels bilden zusammen die Gesamtlösungsmittelmenge. Durch Beimischen des Zusatzlösungsmittels wird die Gesamtlösungsmittelmenge in der Silica-Lösungsmittel-Mischung folglich gegenüber der Gesamtlösungsmittelmenge, die sonst allein durch die hydrolysebedingt gebildete Menge des Reaktionslösungsmittels bestimmt wird, erhöht.

Das Stoffmengenverhältnis von Zusatzlösungsmittel zu verwendetem Silicaprekursor liegt erfindungsgemäß in einem Bereich von 0,5 bis 6, besonders bevorzugt im Bereich von 0,8 bis 3. Bei Anwendung dieser Bereiche weist der Silica-Formkörper nach Abschluss des Verfahrens ein besonders ausgewogenes Verhältnis von niedriger Wärmeleitfähigkeit und hoher mechanischer Stabilität auf. Im engeren Vorzugsbereich liegt ein diesbezüglich besonders stabiles Gleichgewicht vor.

Auch der Zusatz des Polymers kann vor, während oder nach der Hydrolyse erfolgen. Gemäß einer Ausführungsform wird das Polymer vor Durchführung der Hydrolyse dem Ausgangsmaterial zugesetzt. Dies ermöglicht insbesondere eine vollständige Homogenisierung der Ausgangsstoffe, d. h. ein Durchmischen des Ausgangsmaterials mit dem Polymer vor der Hydrolyse. Es kann auch vorgesehen sein, zunächst das Polymer und gegebenenfalls die übrigen Ausgangsstoffe mit dem Wasser zu vermischen und dann den Silicaprekursor zu dieser Mischung hinzuzugeben und dadurch zu hydrolysieren. Das Polymer kann auch bereits in dem Ausgangsmaterial enthalten sein. In jedem Fall erfolgt die Phasenseparation notwendigerweise erst in dem hydrolysierten Ausgangsmaterial. Vorzugsweise wird zunächst das Polymer mit dem Zusatzlösungsmittel und Wasser, ggf. zusätzlich mit der Säure und/oder mit dem Basenprekursor, vermengt und homogenisiert; der homogenisierten Flüssigkeit wird anschließend der Silicaprekursor hinzugefügt.

Verfahrensgemäß wird das hydrolysierte und mit dem Polymer versetzte Ausgangsmaterial in eine Gießform eingebracht, wobei von der Gießform die Geometrie bzw. Form des herzustellenden Silica-Formkörpers definiert ist (d. h., die Geometrie des Silica-Formkörpers entspricht im Wesentlichen der Geometrie der Gießform). Das hydrolysierte Ausgangsmaterial, d. h. die Silica-Lösungsmittel-Mischung, geliert in der Gießform bei einer vorgegebenen Temperatur (im Folgenden auch als "Geliertemperatur" bezeichnet) unter Ausbildung eines Silicagel-Formkörpers, d. h. eines Formkörpers, der im Wesentlichen die Geometrie des herzustellenden Silica-Formkörpers aufweist, aber aus (einem) Silicagel besteht.

Das Silicagel weist eine feste Phase bzw. Komponente und eine flüssige Phase bzw. Komponente auf, wobei sowohl die Primärporen als auch die Sekundärporen von der festen Phase gebildet sind und zunächst mit der flüssigen Phase gefüllt sind. Die flüssige Phase weist neben Wasser das aus Reaktions- und Zusatzlösungsmittel gebildete Lösungsmittel auf; zudem können in der flüssigen Phase gelöste Polymeranteile und (in Abhängigkeit von den eingesetzten Ausgangsstoffen) Basenprekursoranteile sowie Säureanteile enthalten sein.

Den abschließenden Schritt des Verfahrens bildet das Trocknen des Silicagel-Formkörpers; durch die Trocknung geht der Silicagel-Formkörper in den starren Silica-Formkörper über. Beim Trocknen wird die flüssige Phase, insbesondere durch Verdunstung, aus dem offenzelligen Porennetzwerk des Silicagels entfernt. Das Trocknen erfolgt vorzugsweise durch Lagerung des Silicagel-Formkörpers bei gängigen Umgebungsbedingungen (1 atm und 10 - 30 °C), d. h. durch Lufttrocknen. Alternativ kann das Trocknen bei leicht reduziertem Druck erfolgen. Zur Unterstützung des Trocknungsprozesses kann der Silicagel-Formkörper - anstatt der ökonomisch bevorzugten Trocknung bei Raumtemperatur - auf eine Temperatur von 30 °C bis 80 °C erwärmt werden.

Es hat sich gezeigt, dass die Zugabe des Zusatzlösungsmittels die Gesamtporosität des Silicagels bzw. des Silica-Formkörpers - bei nahezu unveränderter mechanischer Stabilität - erhöht, d. h. porenbildend bzw. porogen wirkt, wobei insbesondere die mittleren Porendurchmesser der Sekundärporen größer im Vergleich zu einem zusatzlösungsmittelfrei hergestellten Silicagel bzw. Silica-Formkörper sind.

Mit dem erfindungsgemäßen Verfahren sind Silica-Formkörper herstellbar, die eine Porosität im Bereich zwischen 96 % und 97 %, eine Wärmeleitfähigkeit im Bereich von 0,01 bis 0,02 Wm⁻¹K⁻¹, eine hohe mechanische Stabilität mit einer Druckbelastbarkeit von 0,05 bis 2 MPa sowie eine hohe chemische Stabilität (einschließlich der Nichtbrennbarkeit) aufweisen.

Aufgrund der hierarchischen Porenstruktur ist der Trocknungsvorgang des Silicagels gegenüber dem Stand der Technik deutlich vereinfacht, weil die Trocknung unter Verzicht auf einen Druckautoklaven unter normalen Atmosphärenbedingungen bei Raumtemperatur, also einem Trocknen mit unterkritischen Parametern, durchgeführt werden kann. Dies ist insbesondere auf die vergrößerten Sekundärporen zurückzuführen, in denen sich die in den Primärporen nach dem Gelieren enthaltene flüssige Phase aggregiert und im Anschluss daran effektiv an die Oberfläche des Silica-Formkörpers abtransportiert wird. Die beim Entfernen der flüssigen Phase aus dem Silicagel auftretenden Kapillarkräfte werden auf diese Weise gering gehalten. Als besonders vorteilhaft für den Trocknungsprozess wurde ein im Bereich von 300 bis 800 liegendes Verhältnis von mittlerem Sekundärporendurchmesser zu mittlerem Primärporendurchmesser gefunden.

Der vorstehend beschriebene Effekt in Verbindung mit der höheren mechanischen Stabilität des nach dem erfindungsgemäßen Verfahren hergestellten Silica-Formkörpers ermöglicht es, die bei homogen-porig ausgebildeten Silica-Aerogelen verbreitet angewandte, aufwendige überkritische Trocknung zu vermeiden. Während des Trocknens kann somit die Temperatur unterhalb der kritischen Temperatur und/oder der Druck unterhalb des kritischen Drucks der flüssigen Phase des Silicagels (bzw. von Wasser als deren Hauptbestandteil) gehalten werden, ohne die Struktur der festen Phase des Silicagel-Formkörpers durch die Trocknung wesentlich zu beeinträchtigen. Somit ist also ein rissfreier Übergang vom Silicagel-Formkörper zum Silica-Formkörper bei Trocknung mit unterkritischen Parametern realisierbar.

Die Möglichkeit, die Silicagel-Formkörper durch Lufttrocknung schädigungsfrei in Silica-Formkörper zu überführen, verringert nicht nur den gerätetechnischen Aufwand (durch Entfall der Autoklav-Trocknung), sondern bringt auch eine erhebliche Verkürzung der zur Herstellung der Silica-Formkörper erforderlichen Prozesszeit mit sich.

Zudem reduziert sich die Prozesszeit bei der Silica-Formkörperherstellung dadurch, dass sich durch die erfindungsgemäße Zugabe des Zusatzlösungsmittels die Hydrolysedauer verkürzt.

Der getrocknete monolithische Silica-Formkörper eignet sich insbesondere zur Wärmedämmung von Gebäuden, wobei der Silica-Formkörper selbst als Wärmedämmkörper zum Einsatz kommt oder zuvor in mehrere Wärmedämmkörper (zum Beispiel Wärmedämmplatten) zerlegt wird. Der Silica-Formkörper kann ferner selbst als eine Wärmedämmstoff-Platte ausgebildet werden. Solche plattenförmigen Silica-Formkörper weisen zum Beispiel in zumindest einer Raumdimension eine Abmessung von mehr als 20 cm, bevorzugt mehr als 50 cm, auf.

Gemäß einer Ausgestaltung des Verfahrens zur Herstellung des Silica-Formkörpers wird die flüssige Phase nach dem Gelieren mittels mindestens eines Waschvorgangs aus dem Silicagel-Formkörper entfernt, d. h. in großen Teilen durch eine Austauschflüssigkeit ersetzt. Die verfahrensbedingt erzielte hierarchische Porenstruktur wirkt - ebenso wie beim Trocknungsprozess - förderlich für den Waschvorgang.

Nach dem Trocknen kann ferner eine thermische Nachbehandlung (Kalzinierung) des getrockneten monolithischen Silica-Formkörpers zur Entfernung des dem Ausgangsmaterial zugesetzten Polymers erfolgen. Der Silica-Formkörper wird hierzu beispielsweise für eine Dauer von 30 Minuten bis 24 Stunden einer Temperatur von 200 °C bis 700 °C ausgesetzt. Es wurde festgestellt, dass eine derartige thermische Nachbehandlung die Wärmeleitfähigkeit des Silica-Formkörpers weiter reduziert und dessen mechanische Stabilität weiter erhöht, was insbesondere auf das Entfernen von Restflüssigkeit und/oder thermisch induzierte Umordnungen zurückzuführen sein kann.

Die Gelierung erfolgt in der Gießform bei einer Geliertemperatur von unter 100 °C, erfindungsgemäß bei einer Temperatur zwischen 40 °C und 70 °C. Die Gelierung kann zum Beispiel in einer gasdicht geschlossenen Reaktorkammer durchgeführt werden. Die Gelierung kann im Wesentlichen bei Normaldruck, d. h. bei ca. 1 bar, durchgeführt werden; es kann jedoch auch vorgesehen sein, die Gelierung bei einem leicht erhöhten Umgebungsdruck von zum Beispiel bis zu 2 bar durchzuführen (die Druckerhöhung kann durch Einbringen der Gießform mit dem Silicagel in die gasdichte Reaktorkammer und Druckbeaufschlagen der Reaktorkammer mit einem Gas, bevorzugt einem Inert- oder Edelgas, realisiert werden). Es hat sich gezeigt, dass ein derart erhöhter Umgebungs- bzw. Luftdruck die Gelierung positiv beeinflussen kann. Die Gelierdauer kann zwischen 3 Stunden und 3 Tagen betragen.

Gemäß der Offenbarung wird weiterhin ein Silica-Formkörper bereitgestellt, wobei der Formkörper insbesondere mittels eines Verfahrens gemäß einer der vorstehend beschriebenen Ausführungsformen hergestellt werden kann.

Die Porengröße der Primärporen und der Sekundärporen sowie das Verhältnis des von den Primärporen und den Sekundärporen eingenommenen Volumens lassen sich durch die Wahl der Reaktanten und die Einstellung der jeweiligen Reaktionsparameter (insbesondere Druck, Temperatur und Reaktionsdauer) gezielt beeinflussen bzw. einstellen; wobei zum Beispiel die Porengröße der Primärporen durch den gewählten Silicaprekursor und die Porengröße der Sekundärporen durch die Art und den Mengenanteil des Polymers beeinflusst werden können. Die Primärporen und die Sekundärporen bilden eine offenzellige, bimodale, hierarchische Porenstruktur, wobei die Primärporen einen kleineren Porendurchmesser bzw. eine kleinere Porengröße aufweisen als die Sekundärporen und wobei die Wände zwischen benachbarten Sekundärporen mit den Primärporen durchsetzt sind.

Erfindungsgemäß weisen die Primärporen einen mittleren Porendurchmesser im Bereich von 1 nm bis 100 nm (vorzugsweise 10 nm bis 20 nm) auf, wohingegen die Sekundärporen einen mittleren Porendurchmesser im Bereich von 500 nm bis 20 µm (vorzugsweise 5 µm bis 15 µm) besitzen.

Gemäß einer Ausführungsform ist der Silica-Formkörper (durch entsprechende Wahl der Herstellungsparameter) derart ausgebildet, dass die Sekundärporen mindestens die Hälfte des Hohlraumvolumens des Wärmedämmstoff-Formkörpers bilden. Durch den hohen Anteil an Sekundärporen ergibt sich - bei Gewährleistung der geringen Wärmeleitfähigkeit bzw. einer guten Wärmedämmung - eine für das rissfreie Entfernen der flüssigen Phase aus dem Silicagel besonders förderliche Porenstruktur.

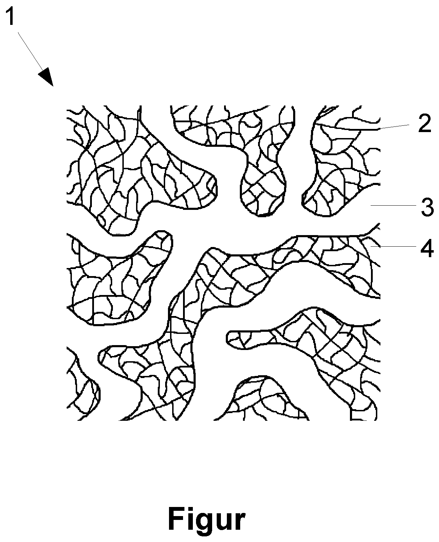

Die Erfindung wird nachfolgend anhand von Ausführungsbeispielen und Vergleichsbeispielen mit Bezug auf die beiliegende Figur veranschaulicht.

Die Figur veranschaulicht als Schnittdarstellung schematisch die Porenstruktur eines nach dem vorstehend beschriebenen Herstellungsverfahren hergestellten Silica-Formkörpers 1. Der Silica-Formkörper 1 weist ein offenzelliges Porennetzwerk mit Primärporen 2 und Sekundärporen 3 auf, wobei die Primärporen 2 einen wesentlich kleineren Porendurchmesser (im Bereich von 10 nm bis 20 nm) aufweisen als die Sekundärporen 3 (Porendurchmesser im Bereich von 5 µm bis 15 µm). Die Silicaphase 4 ist von den kleineren Primärporen 2 durchsetzt, wobei die größeren Sekundärporen 3 wiederum von der mit den Primärporen 2 durchsetzten Silicaphase 4 gebildet sind. Das von den Primärporen 2 und den Sekundärporen 3 gebildete Porennetzwerk weist somit eine bimodale, hierarchische Struktur auf.

Im Folgenden sind zwei Beispiele für die Herstellung eines derartigen Silica-Formkörpers mittels des offenbarten Verfahrens aufgeführt.

### Beispiel 1

Eine Mischung aus 160 g Polyethylenoxid (als Polymer), 1440 g Wasser, 100 g Schwefelsäure, 240 g Ethanol und 260 g Harnstoff (als Basenprekursor) wird homogenisiert. Zusammen mit 1166 g Tetraethylorthosilicat als Silicaprekursor wird die hydrolysierte Reaktionsmischung in eine Gießform eingebracht und in einer Reaktorkammer unter Luftabschluss bei einer Geliertemperatur von 50 °C in der Gießform für 24 Stunden zur Gelierung gebracht, wodurch ein der Geometrie der Gießform entsprechender Silicagel-Formkörper ausgebildet wird. Nachfolgend wird der Silicagel-Formkörper aus der Reaktorkammer entnommen, mit demineralisiertem Wasser gewaschen und schließlich bei Raumtemperatur und Normaldruck von 1 bar unter Ausbildung eines monolithischen Silica-Formkörpers getrocknet. Der getrocknete, monolithische Silica-Formkörper wird anschließend für 10 Stunden einer thermischen Behandlung (Kalzinierung) bei 500 °C unterzogen.

### Beispiel 2

Eine Mischung aus 160 g Polyethylenoxid (als Polymer), 1440 g Wasser, 200 g Weinsäure, 480 g Ethanol und 260 g Harnstoff (als Basenprekursor) wird homogenisiert. Zusammen mit 1166 g Tetraethylorthosilicat (als Silicaprekursor) wird die hydrolysierte Reaktionsmischung in eine Gießform eingebracht und in einer Reaktorkammer unter Luftabschluss bei einer Geliertemperatur von 50 °C für 18 Stunden unter Ausbildung eines Silicagel-Formkörpers zur Gelierung gebracht. Danach wird der Silicagel-Formkörper zunächst mit Wasser und nachfolgend mit einer (im Wesentlichen) unpolaren Austauschflüssigkeit (zum Beispiel Ethanol) gewaschen bzw. darin gespült, wobei die flüssige Phase des Silicagels großteils zunächst durch das Wasser und anschließend durch die Austauschflüssigkeit ersetzt wird. Anschließend wird der Silicagel-Formkörper einer Trocknung unterzogen, wodurch ein monolithischer Silica-Formkörper ausgebildet wird. Der getrocknete Silica-Formkörper wird schließlich für 6 Stunden einer thermischen Behandlung (Kalzinierung) bei 400 °C unterzogen.

## Patentansprüche

1. Verfahren zum Herstellen eines monolithischen Silica-Formkörpers (1) mit einer hierarchischen Porenstruktur aus Primärporen (2) und Sekundärporen (3), deren mittlerer Porendurchmesser größer als der mittlere Porendurchmesser der Primärporen (2) ist, wobei die Primärporen (2) einen mittleren Porendurchmesser zwischen 1 nm und 100 nm und die Sekundärporen (3) einen mittleren Porendurchmesser zwischen 500 nm und 20 µm aufweisen,
aufweisend folgende Schritte:
- Bereitstellen eines Ausgangsmaterials, das mindestens einen Silicaprekursor enthält, wobei der Silicaprekursor Tetraethylorthosilicat oder Tetramethylorthosilicat ist;
- Hydrolysieren des Ausgangsmaterials unter Ausbildung einer Silica-Lösungsmittel-Mischung, wobei die Silica-Lösungsmittel-Mischung als Lösungsmittel ein durch die Hydrolyse entstehendes Reaktionslösungsmittel enthält, wobei das Reaktionslösungsmittel bei Verwendung von Tetraethylorthosilicat als Silicaprekursor Ethanol und bei Verwendung von Tetramethylorthosilicat als Silicaprekursor Methanol ist, wobei die Lösungsmittelmenge in der Silica-Lösungsmittel-Mischung durch Zugabe einer vorgegebenen Menge eines mit dem Reaktionslösungsmittel stofflich identischen Zusatzlösungsmittels erhöht wird, wobei die Stoffmenge des zugegebenen Zusatzlösungsmittels im Bereich des 0,5- bis 6-fachen der Stoffmenge des im Ausgangsmaterial enthaltenen Silicaprekursors liegt,
- Auslösen einer polymerinduzierten Phasenseparation in der Silica-Lösungsmittel-Mischung durch Zusatz eines Polymers, wobei das Polymer Polyethylenoxid ist;
- Gelieren der Silica-Lösungsmittel-Mischung in einer das Ausgangsmaterial aufnehmenden Gießform bei einer Geliertemperatur unter Ausbildung eines Silicagel-Formkörpers, wobei sich die hierarchische Porenstruktur aus Primärporen (2) infolge der Hydrolyse und aus Sekundärporen (3) infolge der polymerinduzierten Phasenseparation ausbildet, wobei die Wände des Silicagel-Formkörpers zwischen benachbarten Sekundärporen (3) mit den Primärporen (2) durchsetzt sind, wobei die Geliertemperatur größer als 40 °C und kleiner als 70 °C ist; und
- Trocknen des Silicagel-Formkörpers unter Ausbildung des Silica-Formkörpers (1).

2. Verfahren nach Anspruch 1, **dadurch gekennzeichnet, dass** das Trocknen bei Raumtemperatur und Atmosphärendruck durchgeführt wird.

3. Verfahren nach Anspruch 1 oder 2, **dadurch gekennzeichnet, dass** die Stoffmenge des zugegebenen Zusatzlösungsmittels im Bereich des 0,8- bis 3-fachen der Stoffmenge des im Ausgangsmaterial enthaltenen Silicaprekursors liegt.

4. Verfahren nach einem der Ansprüche 1 bis 3, **dadurch gekennzeichnet, dass** das Zusatzlösungsmittel dem Ausgangsmaterial vor der Hydrolyse zugegeben wird.

5. Silica-Formkörper (1), hergestellt nach einem der Ansprüche 1 bis 4, wobei der Silica-Formkörper (1) eine offenzellige Porenstruktur mit Primärporen (2) und Sekundärporen (3), deren mittlerer Porendurchmesser größer als der mittlere Porendurchmesser der Primärporen (2) ist, aufweist, und wobei die Wände zwischen benachbarten Sekundärporen (3) mit den Primärporen (2) durchsetzt sind, wobei die Primärporen (2) einen mittleren Porendurchmesser zwischen 1 nm und 100 nm und die Sekundärporen (3) einen mittleren Porendurchmesser zwischen 500 nm und 20 µm aufweisen, **dadurch gekennzeichnet, dass** der Silica-Formkörper (1) eine Porosität im Bereich zwischen 96 % und 97 % aufweist.

6. Silica-Formkörper (1) nach Anspruch 5, wobei die Primärporen (2) einen mittleren Porendurchmesser zwischen 10 nm und 20 nm und die Sekundärporen (3) einen mittleren Porendurchmesser zwischen 5 µm und 15 µm aufweisen.

7. Silica-Formkörper (1) nach Anspruch 6, wobei die Sekundärporen (3) mindestens die Hälfte des Hohlraumvolumens des Silica-Formkörpers (1) bilden.

## Claims

1. A method for producing a monolithic silica molded body (1) with a hierarchical pore structure of primary pores (2) and secondary pores (3), the average pore diameter of which is larger than the average pore diameter of the primary pores (2), wherein the primary pores (2) have an average pore diameter between 1 nm and 100 nm and the secondary pores (3) have an average pore diameter between 500 nm and 20 µm, comprising the following steps:
- providing a starting material containing at least a silica precursor, wherein the silica precursor is tetraethylorthosilicate or tetramethylorthosilicate;
- hydrolyzing the starting material to form a silica-solvent mixture, wherein the silica-solvent mixture contains as solvent a reaction solvent resulting from the hydrolysis, wherein the reaction solvent is ethanol when using tetraethyl orthosilicate as silica precursor and methanol when using tetramethyl orthosilicate as silica precursor, wherein the amount of solvent in the silica-solvent mixture is increased by adding a predetermined amount of an additional solvent which is materially identical to the reaction solvent, wherein the amount of substance of the additional solvent added is in the range of 0.5 to 6 times the amount of substance of the silica precursor contained in the starting material,
- initiating a polymer-induced phase separation in the silica-solvent mixture by adding a polymer, wherein the polymer is polyethylene oxide;
- gelling the silica-solvent mixture in a mold containing the starting material at a gelling temperature to form a silica gel molded body, wherein the hierarchical pore structure is formed from primary pores (2) as a result of hydrolysis and from secondary pores (3) as a result of polymer-induced phase separation, wherein the walls of the silica gel molded body are penetrated with the primary pores (2) between adjacent secondary pores (3), wherein the gelling temperature is greater than 40 °C and less than 70 °C; and
- drying the silica gel molded body to form the silica molded body (1).

2. Method according to claim 1, **characterized in that** the drying is carried out at room temperature and atmospheric pressure.

3. Method according to claim 1 or 2, **characterized in that** the amount of substance of the additional solvent added is in the range of 0.8 to 3 times the amount of substance of the silica precursor contained in the starting material.

4. Method according to one of claims 1 to 3, **characterized in that** the additional solvent is added to the starting material before hydrolysis.

5. Silica molded body (1) produced according to one of claims 1 to 4, wherein the silica molded body (1) has an open-cell pore structure with primary pores (2) and secondary pores (3), the average pore diameter of which is larger than the average pore diameter of the primary pores (2), and wherein the walls between adjacent secondary pores (3) are penetrated with the primary pores (2), wherein the primary pores (2) have an average pore diameter between 1 nm and 100 nm and the secondary pores (3) have an average pore diameter between 500 nm and 20 µm, **characterized in that** the silica molded body (1) has a porosity in the range between 96% and 97%.

6. Silica molded body (1) according to claim 5, wherein the primary pores (2) have an average pore diameter between 10 nm and 20 nm and the secondary pores (3) have an average pore diameter between 5 µm and 15 µm.

7. Silica molded body (1) according to claim 6, wherein the secondary pores (3) form at least half of the cavity volume of the silica molded body (1).

## Revendications

1. Procédé de fabrication d'un corps moulé monolithique en silice (1) avec une structure de pores hiérarchique constituée de pores primaires (2) et de pores secondaires (3), dont le diamètre moyen des pores est supérieur au diamètre moyen des pores primaires (2), les pores primaires (2) présentant un diamètre moyen des pores compris entre 1 nm et 100 nm et les pores secondaires (3) présentant un diamètre moyen des pores compris entre 500 nm et 20 µm, comportant les étapes suivantes :
- mise à disposition d'un matériau de départ contenant au moins un précurseur de silice, dans lequel le précurseur de silice est l'orthosilicate de tétraéthyle ou l'orthosilicate de tétraméthyle ;
- hydrolyse du matériau de départ pour former un mélange de solvants de silice, le mélange de solvants de silice contenant comme solvant un solvant de réaction résultant de l'hydrolyse, le solvant de réaction étant l'éthanol lorsque l'on utilise de l'orthosilicate de tétraéthyle comme excitateur de silice et le méthanol lorsque l'on utilise de l'orthosilicate de tétraméthyle comme excitateur de silice, la quantité de solvant dans le mélange silice-solvant étant augmentée par l'ajout d'une quantité prédéterminée d'un solvant supplémentaire de substance identique à celle du solvant de réaction, la quantité de substance du solvant supplémentaire ajouté étant de l'ordre de 0,5 à 6 fois la quantité de substance du précurseur de silice contenu dans le matériau de départ,
- déclenchement d'une séparation de phase induite par un polymère dans le mélange silice-solvant par addition d'un polymère, le polymère étant du poly(oxyéthylène) ;
- gélification du mélange silice-solvant dans un moule de coulée recevant le matériau de départ à une température de gélification en formant un corps moulé en gel de silice, la structure de pores hiérarchique se formant à partir de pores primaires (2) suite à l'hydrolyse et de pores secondaires (3) suite à la séparation de phase induite par le polymère, les parois du corps moulé en gel de silice entre des pores secondaires (3) adjacents étant traversées par les pores primaires (2), la température de gélification étant supérieure à 40 °C et inférieure à 70 °C ; et
- Séchage du corps moulé en gel de silice pour former le corps moulé en silice (1).

2. Procédé selon la revendication 1, **caractérisé en ce que** le séchage est effectué à température ambiante et sous pression atmosphérique.

3. Procédé selon la revendication 1 ou 2, **caractérisé en ce que** la quantité de matière du solvant supplémentaire ajouté est de l'ordre de 0,8 à 3 fois la quantité de matière du précurseur de silice contenu dans le matériau de départ.

4. Procédé selon l'une des revendications 1 à 3, **caractérisé en ce que** le solvant supplémentaire est ajouté au matériau de départ avant l'hydrolyse.

5. Corps moulé en silice (1), fabriqué selon l'une des revendications 1 à 4, le corps moulé en silice (1) présentant une structure de pores à cellules ouvertes avec des pores primaires (2) et des pores secondaires (3), dont le diamètre moyen des pores est supérieur au diamètre moyen des pores primaires (2), et les parois entre des pores secondaires (3) adjacents étant traversées par les pores primaires (2), les pores primaires (2) présentant un diamètre moyen de pores compris entre 1 nm et 100 nm et les pores secondaires (3) présentant un diamètre moyen de pores compris entre 500 nm et 20 µm, **caractérisé en ce que** le corps moulé en silice (1) présente une porosité comprise entre 96 % et 97 %.

6. Corps moulé en silice (1) selon la revendication 5, dans lequel les pores primaires (2) présentent un diamètre de pore moyen compris entre 10 nm et 20 nm et les pores secondaires (3) présentent un diamètre de pore moyen compris entre 5 µm et 15 µm.

7. Corps moulé en silice (1) selon la revendication 6, les pores secondaires (3) formant au moins la moitié du volume de la cavité du corps moulé en silice (1).
